# EUROPÄISCHE PATENTSCHRIFT

(11) **EP 1 837 499 B1**
(45) Veröffentlichungstag und Bekanntmachung des Hinweises auf die Patenterteilung: **30.05.2018**
(21) Anmeldenummer: 07005090.1
(22) Anmeldetag: 13.03.2007
(51) Int. Cl.: F01N 3/04, F01N 3/20, F28F 3/02, F28D 9/00, F28D 21/00, F02M 26/50, F02M 26/32

(54) **Vorrichtung zur Kühlung eines Abgasstroms**
Device for cooling an exhaust gas stream
Dispositif destiné au refroidissement d'un flux de gaz d'échappement

(30) Priorität: 24.03.2006 DE 102006014188
(43) Veröffentlichungstag der Anmeldung: 26.09.2007
(73) Patentinhaber: MAHLE Behr GmbH & Co. KG, 70469 Stuttgart (DE)
(72) Erfinder: Maucher, Ulrich, Dr.-Ing., 70825 Korntal-Münchingen (DE); Ruckwied, Jens, Dipl.-Ing., 70176 Stuttgart (DE)
(74) Vertreter: Grauel, Andreas

(56) Entgegenhaltungen:
- EP-A- 1 072 783
- WO-A-2005/040708
- DE-A1- 10 060 102
- DE-A1- 10 112 257
- DE-A1-102004 042 454
- JP-A- 9 296 989
- JP-A- 2005 098 617

## Beschreibung

Die Erfindung betrifft eine Verwendung eines Verbrennungsmotors mit einer Vorrichtung zur Kühlung eines Abgasstroms nach dem Oberbegriff des Anspruchs 1.
Bei der Auslegung von Wärmetauschern zur Kühlung des Abgases insbesondere von Fahrzeug-Verbrennungsmotoren, und hier insbesondere von Dieselmotoren, sind Besonderheiten zu berücksichtigen, die keine allgemeine Verwendung von anderen Vorrichtungen zur Kühlung von Fluiden zulassen. Eine der Besonderheiten bei der Kühlung von Abgasen von Verbrennungsmotoren ist die hohe Belastung mit Partikeln, Wasser, Säuren und zum Teil langkettigen Kohlenwasserstoffen bei einer recht großen und häufigen Schwankung der Temperatur während des Betriebs. Durch Kondensation und Partikelablagerung im Kondensat bilden sich daher im Laufe der Lebensdauer des Wärmetauschers an den gekühlten Oberflächen zähe bis harte Ablagerungen, die zu einem erhöhten Strömungswiderstand und einer Verschlechterung der Wärmetauscherleistung führen.
Die Druckschrift EP 1 072 783 A1 offenbart einen Abgaswärmetauscher mit einer Mehrzahl von Abgasrohren und mit Kühlwasserrohren. Eine Mehrzahl von Rippensegmenten ist dabei aufeinandergestapelt innerhalb der abgasführenden Rohre angeordnet. Die kühlwasserführenden Rohre stehen dabei miteinander an den in Längsrichtung der abgasführenden Rohre liegenden Enden miteinander in Fluidkommunikation.
Die Druckschrift EP 1 072 783 A1 beschreibt eine Verwendung eines Verbrennungsmotors mit einer Vorrichtung zur Kühlung eines Abgasstroms nach dem Oberbegriff des Anspruchs 1.
Es ist die Aufgabe der vorliegenden Erfindung, eine Verwendung eines Verbrennungsmotors mit einer Vorrichtung zur Kühlung eines Abgasstroms anzugeben, bei der die Verschlechterung des Strömungswiderstands und der Wärmetauscherleistung im Langzeitbetrieb verringert ist.
Diese Aufgabe wird für eine eingangs genannte Verwendung eines Verbrennungsmotors mit einer Vorrichtung zur Kühlung eines Abgasstroms erfindungsgemäß mit den kennzeichnenden Merkmalen des Anspruchs 1 gelöst.

Untersuchungen haben den überraschenden Effekt gezeigt, dass eine Einlage mit Stegrippen trotz ihrer grundsätzlich im Vergleich zu anderen Einlagen, insbesondere mit geringeren Durchtrittsquerschnitten, eine vergleichsweise geringe Neigung zur Ansammlung von Ablagerungen hat. Grundsätzlich war zu befürchten, dass Turbulenzeinlagen mit Stegrippen verstärkt zur Verblockung einzelner Durchtrittskanäle aufgrund der feingliedrigen Struktur der Stegrippen führen würden. Dies ist jedoch in überraschend geringem Maße der Fall, insbesondere wenn die Stege der Stegrippen relativ kurz sind. Ein möglicher Erklärungsansatz hierfür könnte sein, dass durch die über große Teile der Stegrippeneinlage vorhandene turbulente Strömung des Abgases eine Ablagerung von Partikeln verringert ist, wogegen bei längeren, einförmigen Kanälen geordnete Strömungen ausgebildet werden, die in Wandnähe aufgrund der dort sehr geringen Strömungsgeschwindigkeit die Ablagerung von Partikeln begünstigen.

In einer bevorzugten Ausführungsform weisen die Stege der Stegrippen eine Länge auf, die nicht mehr als etwa 10mm, bevorzugt nicht mehr als etwa 5mm und insbesondere bevorzugt nicht mehr als etwa 3mm beträgt. Je nach gegebenem Bauraum und Verbrennungsmotor können bestimmte Anforderungen an den Druckabfall am Abgas-Wärmetauscher bestehen. Je nach diesen Anforderungen kann einer der vorgenannten Längenbereiche bevorzugt sein.

Weiterhin bevorzugt beträgt eine Dichte der Stegrippen quer zu der Abgasstromrichtung zwischen etwa 20 Stegrippen/dm und etwa 50 Stegrippen/dm, bevorzugt zwischen etwa 25 Stegrippen/dm und 45 Stegrippen/dm. Diese Stegrippendichten haben sich in Versuchen als besonders geeignet herausgestellt. Insbesondere stellen die Stegrippen besonders vorteilhaft einen guten Kompromiss zwischen Verblockungsrisiko und Kühlleistung dar.

Bezüglich einer Höhe der Stegrippen ist zu berücksichtigen, dass bei großen Höhen nur relativ kleine Primärflächen, also durch Kühlmittel gekühlte Oberflächen, zur Verfügung stehen, über die die gesamte Wärme ins Kühlmittel abgegeben werden muss. Bei relativ kleinen Primärflächen steigt dann das Siederisiko im Falle eines flüssigen Kühlmittels. Zudem nimmt der Wirkungsgrad der Einlagen bei zunehmender Höhe der Stegrippen ab. Eine bevorzugte Höhe der Einlage bzw. Stegrippe beträgt daher zwischen etwa 3,5mm und etwa 10mm, besonders bevorzugt zwischen etwa 4mm und etwa 8mm und insbesondere bevorzugt zwischen etwa 4,5mm und etwa 6mm.

In einer bevorzugten Weiterbildung der erfindungsgemäßen Verwendung kann es vorgesehen sein, dass vor der Mehrzahl von Strömungskanälen ein Oxidationskatalysator angeordnet ist. Durch einen solchen Katalysator lassen sich allgemein die Partikelgrößen, Partikeldichten und die Anteile an Kohlenwasserstoffen im Abgas durch Oxidation verringern. Es kann dabei ergänzend oder alternativ vorgesehen sein, dass die Einlagen selber mit einer Beschichtung zur katalytischen Oxidierung des Abgases versehen sind. Insbesondere in Verbindung mit oxidkatalytischen Mitteln kann die sinnvoll einsetzbare Dichte der Stegrippen quer zu der Abgasstromrichtung mehr als etwa 50 Stegrippen/dm, insbesondere etwa 75 Stegrippen/dm betragen. Hierdurch würde eine besonders große Wärmetauscherleistung bei gegebenem Bauraum erzielt werden, ohne dass die langfristige Gefahr von Verblockungen durch Ablagerungen besteht.

In einer besonders bevorzugten Ausführungsform sind die Stegrippen schrägverzahnt. Schrägverzahnte Rippen sind nach experimentellen Befunden besonders geeignet, eine große Langzeitstabilität des Abgas-Wärmetauschers gegen Ablagerungen zu gewährleisten. Dabei beträgt in bevorzugter Ausführung der Winkel zwischen den Stegwänden und einer Hauptrichtung der Stegrippen zwischen etwa 1° und etwa 45°. In besonders bevorzugter Ausführung beträgt der Winkel zwischen etwa 5° und etwa 25°, wobei er in alternativer bevorzugter Ausführung auch zwischen etwa 25° und etwa 45° betragen kann. Der erstgenannte Wertebereich 5° bis 25° eignet sich besonders gut bei üblichen stark druckverlustsensiblen Anwendungen, wobei sich der zweitgenannte Wertebereich zur Erzielung einer optimierten Leistungsdichte, insbesondere bei weniger druckverlustsensiblen Anwendungen, eignet.

Allgemein lässt sich bei der Optimierung einer Einlage mit schräg verzahnten Stegrippen eine Korrelation zwischen dem Winkel der Wandungen und einer Längsteilung der Stegrippe feststellen. Dabei können insbesondere optimale Ausführungen bei kleinen Winkeln größere Teilungen l aufweisen als optimierte Ausführungen mit großen Winkeln. Insbesondere bei kleinen Anstellwinkeln können sich Ausführungen mit moderatem Druckverlust ergeben. Insbesondere bei großen Anstellwinkeln können sich Ausführungen mit optimierter Leistungsdichte ergeben. Insbesondere bei kleinen Anstellwinkeln kann die Längsteilung größer sein, bei großen Anstellwinkeln kann die Längsteilung insbesondere kleiner sein, um optimierte Ausführungen zu erhalten.

In bevorzugter Ausführung ist die Vorrichtung als Stapelscheiben-Wärmetauscher ausgebildet. Sowohl hinsichtlich der Breite eines Strömungskanals als auch hinsichtlich der kostengünstigen Fertigung und Kombinierbarkeit eines Wärmetauschergehäuses mit Stegrippen-Einlagen bietet sich diese Ausführungsform in besonderem Maße an. Alternativ kann die Vorrichtung aber auch als Rohrbündel-Wärmetauscher ausgebildet sein oder als eine andere an sich bekannte Wärmetauscherform.

Allgemein bevorzugt ist die Einlage zur Verhinderung von durch das aggressive Abgas bedingter Korrosion aus einem nichtrostenden Stahl, insbesondere einem austenitischen Stahl, gefertigt.

In einer weiteren vorteilhaften Ausgestaltung können Aluminiumwerkstoffe eingesetzt werden, wobei dann besonders vorteilhaft ein geeigneter Korrosionsschutz vorgesehen werden kann, wie insbesondere eine Legierung und/oder eine Beschichtung.

In einer vorteilhaften Weiterbildung ist die Einlage aus Aluminium ausgebildet. Die Einlage aus Aluminium hat ein besonders geringes Gewicht. Besonders vorteilhaft kann die Einlage aus Aluminium mittels einer Legierung oder Beschichtung zum Korrosionsschutz ausgebildet sein.

Weitere Vorteile und Merkmale einer erfindungsgemäßen Vorrichtung ergeben sich aus den nachfolgend beschriebenen Ausführungsbeispielen sowie aus den abhängigen Ansprüchen.

Nachfolgend werden zwei bevorzugte Ausführungsbeispiele einer erfindungsgemäßen Vorrichtung beschrieben und anhand der anliegenden Zeichnungen näher erläutert.
- Fig. 1 und Fig. 2: zeigen Strömungsprofile im Einlaufbereich.
- Fig. 3: zeigt eine räumliche Explosionszeichnung eines StapelscheibenWärmetauschers.
- Fig. 4: zeigt eine räumliche Darstellung eines Ausschnitts einer geradeverzahnten Stegrippen-Einlage gemäß einem ersten Ausführungsbeispiel der Erfindung.
- Fig. 5: zeigt eine räumliche Darstellung einer schrägverzahnten Stegrippen-Einlage gemäß einem zweiten Ausführungsbeispiel.
- Fig. 6: zeigt ein Diagramm, in dem ein experimentell ermittelter ablagerungsbedingter Druckverlust über eine lange Betriebsdauer bei verschiedenen erfindungsgemäßen Ausführungen dargestellt ist.
- Fig. 7: zeigt ein Diagramm, in dem die Längsteilung I über dem Winkel der Wandungen W aufgetragen ist.

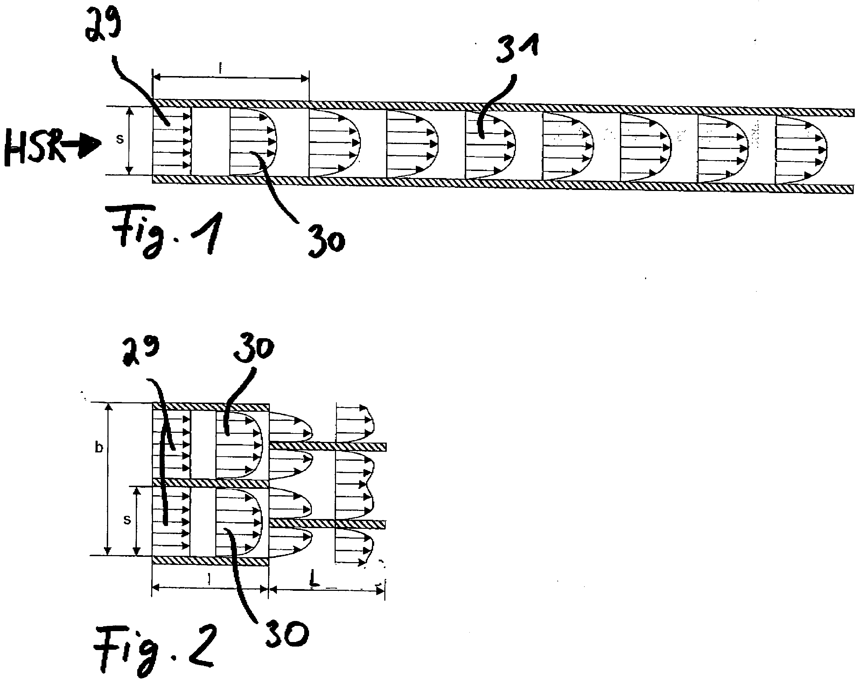

Fig. 1 und Fig. 2 zeigen Strömungsprofile im Einlaufbereich. Grundlagenuntersuchungen, die der Erfindung zugrunde liegen, haben gezeigt, dass dies auf Strömungsprofile mit hoher Geschwindigkeit an der Wand zurückzuführen ist, da hohe Strömungsgeschwindigkeiten an der Wand die Neigung zur Russablagerung deutlich reduzieren. Zur Reduzierung von Russablagerungen, muss die Stegrippe daher so ausgebildet werden, dass die Strömungsgeschwindigkeit an der gesamten Stegrippenoberfläche höher als an anderen Einlagen ist. Hierbei ist zu berücksichtigen, dass sich in längeren Kanälen das anfänglich eher rechteckige Strömungsprofil 29 im Einlaufbereich zu einem bauchigen Strömungsprofil 30, nach dem Einlaufbereich nicht mehr veränderlichen Strömungsprofil einer sogenannten Kanalströmung 31 umformt, das an der Wand wesentlich niedrigere Strömungsgeschwindigkeiten aufweist. Um eine Reduzierung der Russablagerungen zu erreichen, muss die Verzahnung der Stegrippe deutlich im Einlaufbereich liegen. L muss also kleiner als die Länge l des Einlaufbereiches sein.

I bezeichnet den Einlaufbereich. Im Einlaufbereich l sind erhöhte Wandschubspannungen. Es findet eine reduzierte Russablagerung statt. Ferner findet im Einlaufbereich l ein erhöhter Wärmeübergang statt.
Nach dem Einlaufbereich ist in Figur 1 eine ausgebildete Kanalströmung vorzufinden. Das Strömungsprofil ändert sich nicht in der Hauptströmungsrichtung HSR.

In sehr engen Strömungskanälen, die durch eine hohe Dichte von Stegen quer zur Strömungsrichtung entstehen, tritt ein weiterer Effekt auf. Obwohl in solchen Kanälen an der Wand höhere Strömungsgeschwindigkeiten vorliegen als bei breiteren Kanälen, haben enge Kanäle eine höhere Neigung zur vollständigen Verblockung. Dies wird dadurch verursacht, dass schon die Ablagerung einer dünnen Rußschicht, die nicht vollständig zu vermeiden ist, den Kanalquerschnitt so stark verengt, dass sich in einzelnen Kanälen der Durchsatz deutlich reduziert und durch die reduzierte Strömungsgeschwindigkeit in diesen Kanälen verstärkte Russablagerung einsetzt, die bis zum Zusammenwachsen der Rußschichten von beiden Kanalseiten und somit zur vollständigen Verblockung, d.h. zur Verstopfungen, die ein Durchströmen von Medium wie Abgas verhindert, einzelner Kanäle führen kann.

Gerade einförmige Kanäle weisen zudem aufgrund der geringen Turbulenz einen größeren Temperaturgradienten quer zur Strömungsrichtung auf. Dieser begünstigt die Anlagerung von Partikeln und Kondensattropfen aufgrund der Thermophorese. Die Thermophorese beschreibt den Transport von Partikeln und Kondensattropfen aufgrund eines Temperaturgradienten. Gasmolekühle innerhalb der Gasströmung besitzen eine höhere Temperatur und somit eine höhere kinetische Energie als Gasmoleküle in der Nähe der Rippenstege. Aufgrund dieses Unterschieds in der kinetischen Energie werden Partikel und Kondensattropfen in Richtung der Rippenstege befördert und lagern sich dort ab. Dieser Effekt ist bei homogener Temperaturverteilung, wie sie aufgrund der höheren Turbulenz bei verzahnten Stegrippen besser ausgebildet ist, geringer als bei geraden einförmigen Kanälen.

Abhängig von den Strömungsparametern, insbesondere der Reynoldszahl, beträgt die Länge des Einlaufbereichs l/s ca. 2,5 bis 5 und die Länge der Stegrippen muss unterhalb gewählt werden. S bezeichnet die mittlere Durchtrittsbreite zwischen zwei Stegen und beträgt somit b/2-t, wobei t die Blechstärke bezeichnet. Es ergibt sich ein erforderliches Verhältnis l/s < 4, insbesondere l/s < 2. Bei hohem Verblockungsrisiko durch kritische Abgaszusammensetzung ist l/s<1,5, insbesondere l/s<1 zu wählen.

Durch eine Schrägstellung der Stege tritt auf der Drallseite eine höhere Strömungsgeschwindigkeit an der Wand auf, die der Russablagerung entgegenwirkt. Ein weiterer entscheidender Vorteil schrägverzahnter Stegrippen ist, dass in Fällen, bei denen eine geringe Dichte der Stegrippen in Strömungsquerrichtung zur Verblockungsvermeidung erforderlich ist, insbesondere bei ungünstiger Abgaszusammensetzung, trotz geringer Rippenoberfläche eine ausreichende Kühlerleistung gewährleistet werden kann.

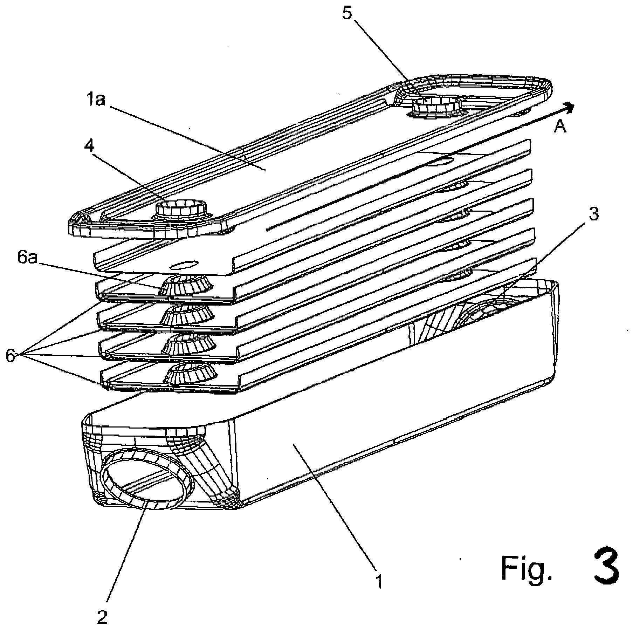

Der erfindungsgemäße Stapelscheiben-Wärmetauscher umfasst ein äußeres Gehäuse 1 mit einem Deckel 1a, wobei ein Eintritt 2 und ein Austritt 3 für das Abgas vorgesehen sind sowie ein Eintritt 4 und ein Austritt 5 für ein flüssiges Kühlmittel. Innerhalb des Gehäuses 1a sind mehrere Scheibenelemente 6 vorgesehen, wobei jedes der Scheibenelemente aus einer oberen Hälfte und einer unteren Hälfte zusammengesetzt ist. Mittels aufgestülpter Kragen 6a sind die Scheibenelemente 6 untereinander und mit dem Gehäuse 1, 1a so verschweißt, dass das Kühlmittel jeweils zwischen den zwei Hälften eines Scheibenelements 6 vom Einlass 4 zum Auslass 5 strömt. Zwischen zwei Scheibenelementen 6 ist jeweils eine in Fig. 3 nicht gezeigte Einlage mit Stegrippen angeordnet, wobei der Zwischenraum zwischen zwei Scheibenelementen 6 jeweils einen Strömungskanal für das Abgas bildet. Die Einlagen sind in Fig. 3 aus Gründen der Übersichtlichkeit nicht dargestellt. Die Einlagen bestehen aus einem rostfreien Stahl. Zur Verbesserung des thermischen Kontakts zwischen den Einlagen und den Scheibenelementen 6 bzw. dem Gehäuse 1, 1a können die Einlagen flächig mit den genannten Elementen verschweißt oder verlötet sein.

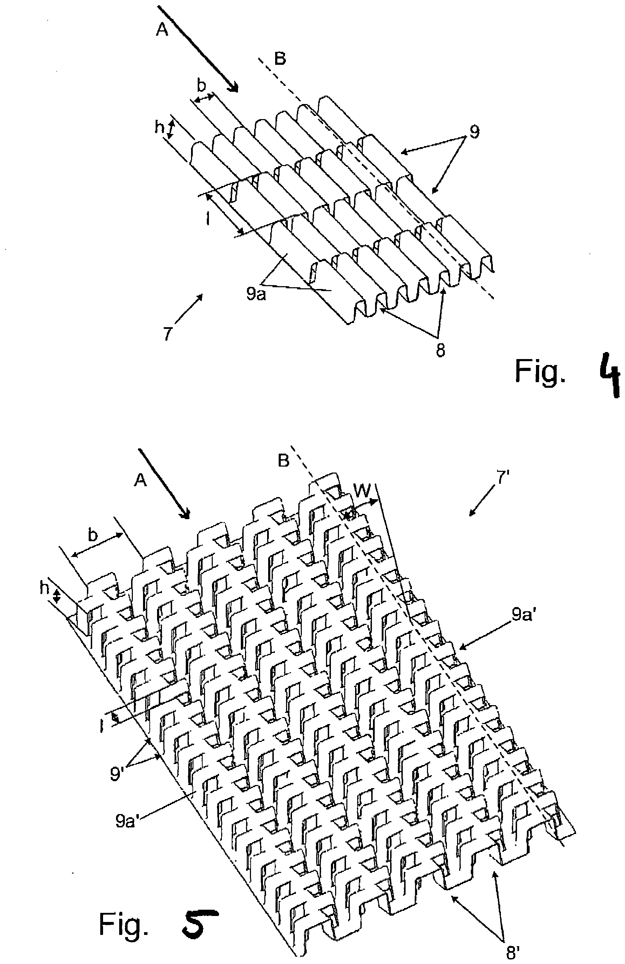

Fig. 4 zeigt eine Einlage 7 gemäß einem ersten Ausführungsbeispiel. Der Pfeil A zeigt die Hauptströmungsrichtung des Abgases. Die Einlage 7 besteht aus einem dünnen Blechmaterial, in das mittels formender Maßnahmen parallele Stegrippen 8 eingebracht sind. Jede der Stegrippen 8 umfasst eine Reihe von in Abgasströmungsrichtung nacheinander angeordneten Stegen 9. Jeweils zwei in Abgasströmungsrichtung hintereinander folgende Stege 9 sind um eine halbe Stegbreite quer zur Abgasströmungsrichtung gegeneinander versetzt angeordnet, so dass sich nach jedem Steg 9 eine Schnittkante mit einem nachfolgenden Steg 9 anschließt. Im vorliegenden Beispiel sind die Wandungen 9a parallel zu der Strömungsrichtung des Abgases ausgerichtet und bilden mit einer Achse B der Stegrippen 8 bzw. der Hauptströmungsrichtung des Abgases A einen Winkel von 0°. Eine solche Stegrippen-Einlage wird als geradeverzahnte Stegrippe bezeichnet.

Im ersten Ausführungsbeispiel beträgt die Länge L eines Steges 9 etwa 4mm. Die Breite b einer einzelnen Stegrippe ist als Breite der Wiederholeinheit der periodischen Struktur quer zur Hauptströmungsrichtung des Abgases definiert. Die Stegrippendichte 2/b beträgt im vorliegenden Beispiel etwa 40 Stegrippen/dm. Die Breite b einer Stegrippe beträgt somit etwa 5mm.

Die Höhe h der Stegrippen entspricht dem Abstand zweier benachbarter Scheibenelemente 6 des Wärmetauschers und beträgt vorliegend etwa 5mm.

Fig. 5 zeigt eine Stegrippen-Einlage gemäß einem zweiten bevorzugten Ausführungsbeispiel. Im Unterschied zu dem ersten Ausführungsbeispiel nach Fig. 4 sind hierbei die seitlichen Wandungen 9' der einzelnen Stege nicht parallel zu der Hauptrichtung B der Stegrippen 8' ausgerichtet. Vielmehr schließt jede der Wandungen 9a' der Stege 9' mit der Hauptrichtung B der Stegrippen 8' einen Winkel W von etwa 30° ein. Die weiteren Maße der schrägverzahnten Stegrippen-Einlage 7' entsprechen den Maßen der geradeverzahnten Stegrippe 7 aus dem ersten Ausführungsbeispiel. Die Zeichnungen sind nicht maßstabsgerecht.

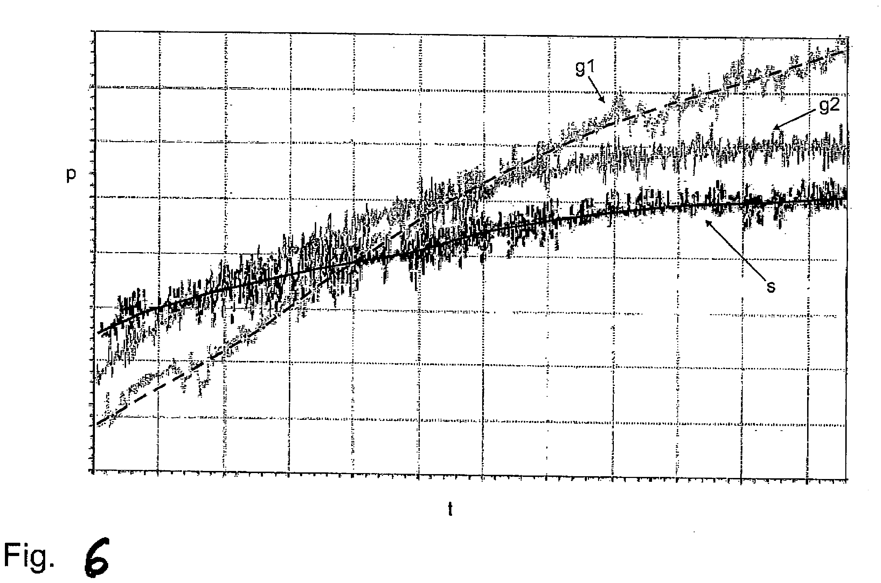

In Fig. 6 sind experimentelle Ergebnisse von Langzeittests verschiedener Wärmetauscher mit Stegrippen für einen Fall mit hoher Verrußungsneigung gezeigt. Aufgetragen ist dabei jeweils der über dem Wärmetauscher abfallende Druckverlust p gegenüber der Betriebsdauer t. Die Daten g1 (gestrichelte Glättungslinie) entsprechen einer geradeverzahnten Stegrippe mit relativ langen Stegen. Die Daten g2 (gepunktete Glättungslinie) entsprechen einer geradeverzahnten Stegrippe mit relativ kurzen Stegen. Die Daten g3 (durchgezogene Glättungslinie) entsprechen einer schrägverzahnten Stegrippe mit relativ kurzen Stegen. Erkennbar weisen die Wärmetauscher zu Betriebsbeginn in der Reihenfolge g1-g2-g3 einen zunehmenden Strömungswiderstand auf, weswegen die Anordnung g3 zunächst am wenigsten geeignet erscheint. Über die lange Betriebsdauer ist jedoch festzustellen, dass die Zunahme der Verschmutzung und des Strömungswiderstands in der Reihenfolge g1-g2-g3 langsamer erfolgt, wobei zu Ende des Versuchs der Strömungswiderstand in der umgekehrten Reihenfolge g3-g2-g1 zunimmt. Im Interesse einer hohen Konstanz im Betrieb des Kraftfahrzeugs ist somit die schrägverzahnte Stegrippe g3, insbesondere in solchen Fällen, am besten geeignet. Ein nicht dargestellter Vergleich mit nicht verzahnten Einlagen, zum Beispiel Wellrippen, zeigt, dass sämtliche der Ausführungen g1, g2, g3 eine bessere Konstanz im Dauerbetrieb aufweisen als die Wellrippen-Ausführungen. Es ist dabei zu beachten, dass die Ausführungen g1, g2 im vorgeschlagenen Längenbereich l/s liegen.

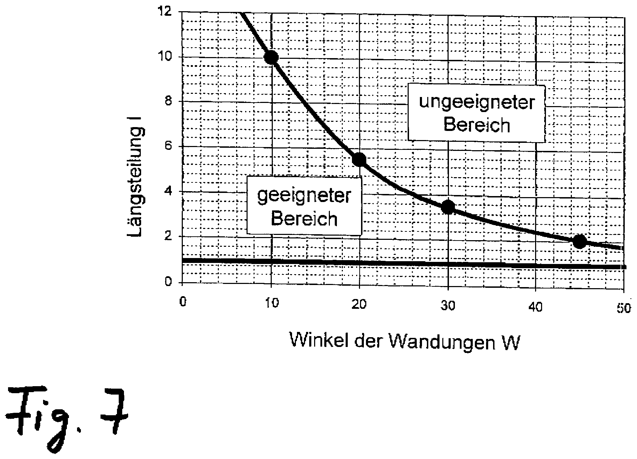

Fig. 7 zeigt ein Diagramm, in dem die Längsteilung l über dem Winkel der Wandungen W aufgetragen ist. Gemäß Figur 7 ergeben sich geeignete Ausführungen bei 10° mit Längsteilungen l < ca.10mm, bei 20° mit l < ca. 6mm, bei 30° mit l<ca. 4mm und bei 45° mit l< ca. 2mm.
Die minimale Längsteilung l liegt bei allen Winkeln bei ca. 1mm. Die zulässige Kanalstreckung l/s liegt in etwa innerhalb der gleichen Grenzen wie für eine gerade verzahnte Stegrippe, wobei s den Stegabstand quer zur Hauptströmungsrichtung B bezeichnet. In der Regel sind Längsteilungen l < 1mm aus fertigungstechnischen Gründen schlecht herzustellen.

Der Wärmetauscher, insbesondere der Stapelscheibenwärmetauscher, kann mit oder ohne Gehäuse ausgebildet sein.

## Patentansprüche

1. Verwendung eines Verbrennungsmotors mit einer Vorrichtung zur Kühlung eines Abgasstroms des Verbrennungsmotors, insbesondere eines Kraftfahrzeug-Dieselmotors, umfassend eine Mehrzahl von Strömungskanälen, die mit einer Abgasführung des Verbrennungsmotors verbunden sind, wobei die Strömungskanäle von einem Kühlmittel zur Abführung der Abgaswärme umströmbar sind, und eine innerhalb zumindest eines der Strömungskanäle angeordnete Einlage (7, 7'), wobei die Einlage (7, 7') in thermischem Kontakt mit dem Strömungskanal steht und zumindest teilweise von dem Abgas umströmbar ist, wobei die Einlage (7, 7') in dem Bereich ihrer Umströmung durch das Abgas Stegrippen (8, 8') aufweist, wobei in Strömungsrichtung des Abgases aufeinander folgende Stege (9, 9') der Stegrippen (8, 8') zueinander versetzt angeordnet sind, **dadurch gekennzeichnet, dass** zur Reduzierung der Rußablagerungen die Verzahnung der Stegrippe deutlich in einem Einlaufbereich liegt, die Länge (L) der Stegrippen somit kleiner als die Länge (l) des Einlaufbereiches ist und die Länge (l) des Einlaufbereichs dividiert durch die mittlere Durchtrittsbreite (s) zwischen zwei Stegen 2,5 bis 5 beträgt, wobei der Einlaufbereich eines Strömungskanals dadurch definiert ist, dass ein anfänglich eher rechteckiges Strömungsprofil sich im Einlaufbereich zu einem bauchigen Strömungsprofil entwickelt und sich nach dem Einlaufbereich zu einem sich nicht mehr veränderlichen Strömungsprofil ausbildet.

2. Verwendung nach Anspruch 1, **dadurch gekennzeichnet, dass** die Stege (9, 9') der Stegrippen (8, 8') eine Länge (L) aufweisen, die nicht mehr als etwa 10 mm beträgt.

3. Verwendung nach Anspruch 2, **dadurch gekennzeichnet, dass** die Stege (9, 9') der Stegrippen (8, 8') eine Länge (L) aufweisen, die nicht mehr als etwa 5 mm beträgt.

4. Verwendung nach Anspruch 3, **dadurch gekennzeichnet, dass** die Stege (9, 9') der Stegrippen (8, 8') eine Länge (L) aufweisen, die nicht mehr als etwa 3 mm beträgt.

5. Verwendung nach einem der vorhergehenden Ansprüche, **dadurch gekennzeichnet, dass** eine Dichte der Stegrippen (8, 8') quer zu der Abgasstromrichtung zwischen etwa 20 Stegrippen/dm und etwa 50 Stegrippen/dm beträgt.

6. Verwendung nach Anspruch 5, **dadurch gekennzeichnet, dass** die Dichte der Stegrippen (8, 8') quer zu der Abgasstromrichtung zwischen etwa 25 Stegrippen/dm und etwa 45 Stegrippen/dm beträgt.

7. Verwendung nach einem der vorhergehenden Ansprüche, **dadurch gekennzeichnet, dass** der Quotient aus einer Länge (L) der Stege (9, 9') und einer Durchtrittsbreite (s) der Stegrippen (8, 8') quer zu der Abgasstromrichtung kleiner als 4,0 ist.

8. Verwendung nach Anspruch 7, **dadurch gekennzeichnet, dass** der Quotient kleiner als 2,0 ist.

9. Verwendung nach Anspruch 8, **dadurch gekennzeichnet, dass** der Quotient kleiner als etwa 1,5 ist.

10. Verwendung nach einem der vorhergehenden Ansprüche, **dadurch gekennzeichnet, dass** eine Höhe (h) der Stegrippen (8, 8') zwischen etwa 3,5 mm und 10 mm beträgt.

11. Verwendung nach Anspruch 10, **dadurch gekennzeichnet, dass** die Höhe (h) zwischen etwa 4 mm und etwa 8 mm beträgt.

12. Verwendung nach Anspruch 11, **dadurch gekennzeichnet, dass** die Höhe (h) zwischen etwa 4,5 mm und etwa 6 mm beträgt.

13. Verwendung nach einem der vorhergehenden Ansprüche, **dadurch gekennzeichnet, dass** vor der Mehrzahl von Strömungskanälen ein Oxidationskatalysator angeordnet ist.

14. Verwendung nach einem der vorhergehenden Ansprüche, **dadurch gekennzeichnet, dass** die Einlage (7, 7') zumindest teilweise mit einer Beschichtung zur katalytischen Oxidierung des Abgases versehen ist.

15. Verwendung nach Anspruch 13 oder 14, **dadurch gekennzeichnet, dass** die eine Dichte der Stegrippen (8, 8') quer zu der Abgasstromrichtung mehr als etwa 50 Stegrippen/dm, insbesondere etwa 75 Stegrippen/dm, beträgt.

16. Verwendung nach einem der vorhergehenden Ansprüche, **dadurch gekennzeichnet, dass** die Stegrippen (8, 8') schrägverzahnt sind.

17. Verwendung nach Anspruch 16, **dadurch gekennzeichnet, dass** ein Winkel zwischen den Stegwandungen und einer Hauptrichtung der Stegrippen (8, 8') zwischen etwa 1° und etwa 45° beträgt.

18. Verwendung nach Anspruch 17, **dadurch gekennzeichnet, dass** der Winkel zwischen etwa 5° und etwa 25° beträgt.

19. Verwendung nach Anspruch 17, **dadurch gekennzeichnet, dass** der Winkel zwischen etwa 25° und etwa 35° beträgt.

20. Verwendung nach Anspruch 17, **dadurch gekennzeichnet, dass** der Winkel weniger als etwa 20° beträgt und dass eine Länge (L) der Stege (9, 9') zwischen etwa 1mm und etwa 10mm beträgt.

21. Verwendung nach Anspruch 17, **dadurch gekennzeichnet, dass** der Winkel zwischen etwa 20° und etwa 35° beträgt und dass eine Länge (L) der Stege (9, 9') zwischen etwa 1 mm und etwa 6mm beträgt.

22. Verwendung nach Anspruch 17, **dadurch gekennzeichnet, dass** der Winkel mehr als etwa 35° beträgt und dass eine Länge (L) der Stege (9, 9') zwischen etwa 1mm und etwa 3mm beträgt.

23. Verwendung nach einem der vorhergehenden Ansprüche, **dadurch gekennzeichnet, dass** die Vorrichtung als Stapelscheiben-Wärmetauscher ausgebildet ist.

24. Verwendung nach einem der Ansprüche 1 bis 22, **dadurch gekennzeichnet, dass** die Vorrichtung als Rohrbündel-Wärmetauscher ausgebildet ist.

25. Verwendung nach einem der vorhergehenden Ansprüche, **dadurch gekennzeichnet, dass** die Einlage (7, 7') aus einem nichtrostenden Stahl, insbesondere einem austenitischen Stahl, besteht.

26. Verwendung nach einem der Ansprüche 1 bis 24, **dadurch gekennzeichnet, dass** die Einlage (7, 7') aus einem Aluminium ausgebildet ist.

## Claims

1. Use of an internal combustion engine with a device for cooling an exhaust gas flow of the internal combustion engine, in particular a diesel engine of a motor vehicle, comprising a plurality of flow ducts which are connected to an exhaust gas recirculation system of the internal combustion engine, wherein a coolant can flow around the flow ducts in order to dissipate the exhaust gas heat, and an insert (7, 7') which is arranged within at least one of the flow ducts, wherein the insert (7, 7') is in thermal contact with the flow duct and exhaust gas can flow at least partially around it, wherein the insert (7, 7') has profiled fins (8, 8') in the area in which the exhaust gas flows around it, wherein in the exhaust gas flow direction, successive profiles (9, 9') of the profiled fins (8, 8') are arranged so as to be offset relative to one another, **characterised in that** in order to reduce the soot deposits, the toothing of the profiled fin clearly is within an inlet area, consequently, the length (L) of the profiles fins is smaller than the length (l) of the inlet area and the length (l) of the inlet area divided by the medium throughflow width (s) between two profiles is 2.5 to 5, wherein the inlet area of a flow duct is defined **in that** an initially rather rectangular flow profile develops into a bulbous flow profile in the inlet area and forms into a flow profile which does not change anymore downstream of the inlet area.

2. Use according to claim 1, **characterised in that** the profiles (9, 9') of the profiled fins (8, 8') have a length (L) which is no greater than approximately 10 mm.

3. Use according to claim 2, **characterised in that** the profiles (9, 9') of the profiled fins (8, 8') have a length (L) which is no greater than approximately 5 mm.

4. Use according to claim 3, **characterised in that** the profiles (9, 9') of the profiled fins (8, 8') have a length (L) which is no greater than approximately 3 mm.

5. Use according to one of the preceding claims, **characterised in that** a density of the profiled fins (8, 8') transversely with respect to the exhaust gas flow direction is between approximately 20 profiled fins/dm and approximately 50 profiled fins/dm.

6. Use according to claim 5, **characterised in that** the density of the profiled fins (8, 8') transversely with respect to the exhaust gas flow direction is between approximately 25 profiled fins/dm and approximately 45 profiled fins/dm.

7. Use according to one of the preceding claims, **characterised in that** the quotient of a length (L) of the profiles (9, 9') and a throughflow width (s) of the profiled fins (8, 8') transversely with respect to the exhaust gas flow direction is less than 4.0.

8. Use according to claim 7, **characterised in that** the quotient is less than 2.0.

9. Use according to claim 8, **characterised in that** the quotient is less than approximately 1.5.

10. Use according to one of the preceding claims, **characterised in that** a height (h) of the profiled fins (8, 8') is between approximately 3.5 mm and 10 mm.

11. Use according to claim 10, **characterised in that** the height (h) is between approximately 4 mm and approximately 8 mm.

12. Use according to claim 11, **characterised in that** the height (h) is between approximately 4.5 mm and approximately 6 mm.

13. Use according to one of the preceding claims, **characterised in that** an oxidation catalytic converter is arranged upstream of the plurality of flow ducts.

14. Use according to one of the preceding claims, **characterised in that** the insert (7, 7') is at least partially provided with a coating for catalytically oxidising the exhaust gas.

15. Use according to claim 13 or 14, **characterised in that** the density of the profiled fins (8, 8') transversely with respect to the exhaust gas flow direction is more than approximately 50 profiled fins/dm, in particular approximately 75 profiled fins/dm.

16. Use according to one of the preceding claims, **characterised in that** the profiled fins (8, 8') are obliquely-toothed.

17. Use according to claim 16, **characterised in that** an angle between the profile side walls and a main direction of the profiled fins (8, 8') is between approximately 1° and approximately 45°.

18. Use according to claim 17, **characterised in that** the angle is between approximately 5° and approximately 25°.

19. Use according to claim 17, **characterised in that** the angle is between approximately 25° and approximately 35°.

20. Use according to claim 17, **characterised in that** the angle is less than approximately 20° and that a length (L) of the profiles (9, 9') is between approximately 1 mm and approximately 10 mm.

21. Use according to claim 17, **characterised in that** the angle is between approximately 20° and approximately 35° and that a length (L) of the profiles (9, 9') is between approximately 1 mm and approximately 6 mm.

22. Use according to claim 17, **characterised in that** the angle is more than approximately 35° and that a length (L) of the profiles (9, 9') is between approximately 1 mm and approximately 3 mm.

23. Use according to one of the preceding claims, **characterised in that** the device is formed as a stacked plate heat exchanger.

24. Use according to one of claims 1 to 22, **characterised in that** the device is formed as a tube bundle heat exchanger.

25. Use according to one of the preceding claims, **characterised in that** the insert (7, 7') is comprised of a stainless steel, in particular an austenitic steel.

26. Use according to one of claims 1 to 24, **characterised in that** the insert (7, 7') is formed of an aluminium.

## Revendications

1. Utilisation d'un moteur à combustion interne comprenant un dispositif servant au refroidissement d'un flux de gaz d'échappement du moteur à combustion interne, en particulier d'un moteur diesel d'un véhicule automobile, ledit dispositif comprenant une pluralité de conduits d'écoulement qui sont reliés à un guidage des gaz d'échappement du moteur à combustion interne, où les conduits d'écoulement peuvent être contournés par un liquide de refroidissement servant à l'évacuation de la chaleur des gaz d'échappement, et comprenant une pièce intercalaire (7, 7') disposée à l'intérieur d'au moins l'un des conduits d'écoulement, où la pièce intercalaire (7, 7') est en contact thermique avec le conduit d'écoulement et peut être contournée au moins partiellement par les gaz d'échappement, où la pièce intercalaire (7, 7'), dans la zone de son écoulement de contournement par les gaz d'échappement, présente des ailettes à nervures (8, 8'), où des nervures (9, 9') des ailettes à nervures (8, 8'), qui se suivent dans la direction d'écoulement des gaz d'échappement, sont disposées en étant décalées les unes par rapport aux autres, **caractérisée en ce que**, pour la réduction des dépôts de suie, la denture des ailettes à nervures se situe nettement dans une zone d'entrée, **en ce que** la longueur (L) des ailettes à nervures est par conséquent plus petite que la longueur (l) de la zone d'entrée et **en ce que** la longueur (l) de la zone d'entrée, divisée par la largeur moyenne de passage (s) entre deux nervures, est comprise entre 2,5 et 5, où la zone d'entrée d'un conduit d'écoulement est définie, par le fait qu'un profil d'écoulement plutôt rectangulaire dans sa partie initiale se développe dans la zone d'entrée, pour former un profil d'écoulement bombé et, en aval de la zone d'entrée, est configuré pour former un profil d'écoulement qui ne se modifie plus.

2. Utilisation selon la revendication 1, **caractérisée en ce que** les nervures (9, 9') des ailettes à nervures (8, 8') présentent une longueur (L) qui n'est pas supérieure à 10 mm environ.

3. Utilisation selon la revendication 2, **caractérisée en ce que** les nervures (9, 9') des ailettes à nervures (8, 8') présentent une longueur (L) qui n'est pas supérieure à 5 mm environ.

4. Utilisation selon la revendication 3, **caractérisée en ce que** les nervures (9, 9') des ailettes à nervures (8, 8') présentent une longueur (L) qui n'est pas supérieure à 3 mm environ.

5. Utilisation selon l'une quelconque des revendications précédentes, **caractérisée en ce qu'**une densité des ailettes à nervures (8, 8'), dans le sens transversal par rapport à la direction du flux de gaz d'échappement, est égale à une quantité comprise entre environ 20 ailettes à nervures / dm et environ 50 ailettes à nervures / dm.

6. Utilisation selon la revendication 5, **caractérisée en ce que** la densité des ailettes à nervures (8, 8'), dans le sens transversal par rapport à la direction du flux de gaz d'échappement, est égale à une quantité comprise entre environ 25 ailettes à nervures / dm et environ 45 ailettes à nervures / dm.

7. Utilisation selon l'une quelconque des revendications précédentes, **caractérisée en ce que** le quotient calculé entre une longueur (L) des nervures (9, 9') et une largeur de passage (s) des ailettes à nervures (8, 8') est inférieur à 4,0 dans le sens transversal par rapport à la direction du flux de gaz d'échappement.

8. Utilisation selon la revendication 7, **caractérisée en ce que** le quotient est inférieur à 2,0.

9. Utilisation selon la revendication 8, **caractérisée en ce que** le quotient est inférieur à 1,5 environ.

10. Utilisation selon l'une quelconque des revendications précédentes, **caractérisée en ce qu'**une hauteur (h) des ailettes à nervures (8, 8') est comprise entre 3,5 mm environ et 10 mm.

11. Utilisation selon la revendication 10, **caractérisée en ce que** la hauteur (h) est comprise entre 4 mm environ et 8 mm environ.

12. Utilisation selon la revendication 11, **caractérisée en ce que** la hauteur (h) est comprise entre 4,5 mm environ et 6 mm environ.

13. Utilisation selon l'une quelconque des revendications précédentes, **caractérisée en ce qu'**un catalyseur d'oxydation est disposé en amont de la pluralité de conduits d'écoulement.

14. Utilisation selon l'une quelconque des revendications précédentes, **caractérisée en ce que** la pièce intercalaire (7, 7') est dotée au moins partiellement d'un revêtement prévu pour l'oxydation catalytique des gaz d'échappement.

15. Utilisation selon la revendication 13 ou 14, **caractérisée en ce que** l'une des densités des ailettes à nervures (8, 8'), dans le sens transversal par rapport à la direction du flux de gaz d'échappement, est supérieure à environ 50 ailettes à nervures / dm, en particulier supérieure à environ 75 ailettes à nervures / dm.

16. Utilisation selon l'une quelconque des revendications précédentes, **caractérisée en ce que** les ailettes à nervures (8, 8') sont à denture hélicoïdale.

17. Utilisation selon la revendication 16, **caractérisée en ce qu'**un angle formé entre les parois des nervures et une direction principale des ailettes à nervures (8, 8') est compris entre 1° environ et 45°environ.

18. Utilisation selon la revendication 17, **caractérisée en ce que** l'angle est compris entre 5° environ et 25° environ.

19. Utilisation selon la revendication 17, **caractérisée en ce que** l'angle est compris entre 25° environ et 35° environ.

20. Utilisation selon la revendication 17, **caractérisée en ce que** l'angle est inférieur à 20° environ, et **en ce qu'**une longueur (L) des nervures (9, 9') est comprise entre 1 mm environ et 10 mm environ.

21. Utilisation selon la revendication 17, **caractérisée en ce que** l'angle est compris entre 20° environ et 35° environ, et **en ce qu'**une longueur (L) des nervures (9, 9') est comprise entre 1 mm environ et 6 mm environ.

22. Utilisation selon revendication 17, **caractérisée en ce que** l'angle est supérieur à 35° environ, et **en ce qu'**une longueur (L) des nervures (9, 9') est comprise entre 1 mm environ et 3 mm environ.

23. Utilisation selon l'une quelconque des revendications précédentes, **caractérisée en ce que** le dispositif est conçu comme un échangeur de chaleur à plaques empilées.

24. Utilisation selon l'une quelconque des revendications 1 à 22, **caractérisée en ce que** le dispositif est conçu comme un échangeur de chaleur à faisceaux de tubes.

25. Utilisation selon l'une quelconque des revendications précédentes, **caractérisée en ce que** la pièce intercalaire (7, 7') se compose d'un acier inoxydable, en particulier d'un acier austénitique.

26. Utilisation selon l'une quelconque des revendications 1 à 24, **caractérisée en ce que** la pièce intercalaire (7, 7') est formée à partir d'un aluminium.
